# EUROPEAN PATENT SPECIFICATION

(11) **EP 2 718 073 B1**
(45) Date of publication and mention of the grant of the patent: **25.10.2017**
(21) Application number: 12738151.5
(22) Date of filing: 11.06.2012
(51) Int. Cl.: B08B 9/00, B08B 17/02, B28C 5/42

(54) **CONCRETE MIXER APPARATUS**
BETONMISCHER
APPAREIL POUR MALAXEUR À BÉTON

(30) Priority: 09.06.2011 GB 201109664; 03.11.2011 GB 201118950; 14.11.2011 GB 201119524; 28.02.2012 GB 201203481; 01.03.2012 GB 201203655
(43) Date of publication of application: 16.04.2014
(73) Proprietor: McFarlane, Brinsley, Carmichael ML12 6NQ (GB)
(72) Inventor: McFarlane, Brinsley, Carmichael ML12 6NQ (GB)
(74) Representative: Creation IP Ltd
(86) International application number: PCT/GB2012/000506
(87) International publication number: WO 2012/168686

(56) References cited:
- DE-U1- 9 216 144
- JP-A- 2007 210 103
- JP-U- H0 563 807
- JP-U- 55 049 943
- JP-U- 59 090 407
- JP-U- 59 118 511
- JP-U- 62 038 109
- US-A1- 2004 159 595
- US-A1- 2006 000 490

## Description

### Field of the Invention

The present invention relates to an apparatus for a lorry based concrete mixer. Particularly, but not exclusively the apparatus relates to an apparatus for catching debris which may bounce out of the drum of a lorry based concrete mixer during transit.

### Background to the Invention

Lorry-based concrete mixers are supplied with a movable discharge chute which can be positioned in various configurations to allow the discharge of concrete from the mixer drum. When not in use, and particularly when the vehicle is in transit, the chute is swung to a stowed position.

In the stowed position, there is the possibility that any loose stones within the mixer drum can bounce down the chute onto the road. As the stone will be moving at speed, it has the potential to bounce and strike another vehicle causing damage. This has been partially alleviated, in some cases, by the incorporation of a flap mounted to the chute. The flap is positioned to prevent stones leaving the chute during transit and is moved out of the way to allow for the discharge of concrete when required. One of the drawbacks of this arrangement is that this is known for the flap to be permanently located in the discharge position obviating the benefit of the chute; permitting stones to run down the chute during transit.

In the stowed position, there is also the possibility over time that the brackets holding the chute in the stowed position can come loose with the result that the chute can potentially swing away from the discharge position towards a vehicle following the mixer.

### Summary of the Invention

The present invention provides a lorry-based concrete mixer comprising:
a body;
a drum mounted on the body, wherein the drum is adapted to store concrete;
a discharge chute having an inlet and an outlet, wherein the inlet is arranged to receive material exiting the drum;
wherein the discharge chute is movable between a discharge position and an in-transit stowed position, wherein in the in-transit stowed position the discharge chute is moved from the discharge position to be positioned proximate the body;
a vessel attached to the body and positioned on the body to be beneath the outlet of the discharge chute when the discharge chute is moved to the in-transit stowed position, wherein the vessel is operable to receive wash-down water or slurry from the outlet of the discharge chute whilst the discharge chute is secured in the in-transit stowed position and whilst the vehicle is stationary and wherein the vessel is also operable to receive and retain debris from the drum exiting the outlet of the discharge chute when the discharge chute is secured in the in-transit stowed position and whilst the vehicle is moving; and
characterised by a storage means adapted to secure at least one secondary chute in the stowed position, wherein the storage means is adapted to secure the at least one secondary chute adjacent the outlet of the discharge chute and wherein the storage means, in use, suspends the at least one secondary chute above the vessel.

The lorry-based concrete mixer may further comprise a securing mechanism adapted to secure the discharge chute to the body of the lorry-based concrete mixer in the stowed position, the securing mechanism being adapted to secure the outlet of the discharge chute over the vessel.

The securing mechanism may be a male member attached to one of the discharge chute or, in use, the body of the lorry-based concrete mixer and a female member attached to the other of the discharge chute or body of the lorry-based concrete mixer. The male and female members, once engaged, may be arranged to prevent movement of the discharge chute in a horizontal plane.

In the stowed position, the outlet of the discharge chute is, in use, positioned above the vessel.

The storage means may be adapted to position the at least one secondary chute such that debris and/or fluid exiting the discharge chute is directed towards the vessel.

The storage means may be adapted to secure the at least one secondary chute in both the stowed position and the discharge position.

The vessel may be adapted to be removably received within a cradle defined by a lorry-based concrete mixer chassis.

The vessel may be adapted to be pivotally mounted to a lorry-based concrete mixer.

The vessel may be movable about the pivotal mounting. The vessel is adapted to be fixed relative to a lorry-based concrete mixer. The vessel may be removable from the lorry-based concrete mixer.

The apparatus may further comprise securing means adapted to secure the discharge chute to a lorry-based concrete mixer. The securing means may be a mechanism adapted to secure the discharge chute to a frame or chassis of the lorry-based concrete mixer. The securing mechanism may be adapted to secure the discharge chute end over the vessel.

The securing mechanism may be a male member attached to one of the discharge chute or, in use, a frame or chassis of the lorry-based concrete mixer and a female member attached to the other of the discharge chute or frame or chassis of the lorry-based concrete mixer.

The male and female member, once engaged, may be arranged to prevent movement of the discharge chute in a horizontal plane. Such an arrangement prevents the discharge chute from swinging from the stowed position to the discharge position. The securing means may be the primary method of securing the discharge chute in the stowed position.

The male member may be a peg and a female member may be a loop. In an embodiment, as the chute is lowered towards the vessel, the peg passes into the loop. The peg may be a tapered peg.

The vessel may be adapted to be removably received within a cradle defined by a lorry-based concrete mixer chassis.

The vessel may comprise an outlet. An outlet may be provided to allow the vessel to be emptied.

The apparatus may further comprise an outlet grill or the like adapted to prevent larger pieces of debris from passing through the outlet.

The apparatus may further comprise a storage container.

The vessel may be in communication with the storage container such that debris can pass through the vessel outlet into the storage container.

The storage container and the vessel outlet may be connected by means of a conduit. Providing a storage container which can be located in space between, for example, the rear wheels, allows the size of the vessel to be reduced whilst still permitting the apparatus as a whole to deal with the debris coming down the chute.

The storage container may be adapted to hold fluid. In some embodiments, the vessel is in fluid communication with the storage container. Such an arrangement permits the vessel to be washed in the event of, for example, a discharge of slurry into the vessel, the slurry being flushed into the storage container. The apparatus can also be used to wash the discharge chute after depositing a load of concrete. After depositing, the discharge chute generally contains some debris which, if not removed relatively quickly, hardens, leading to further more prolonged cleaning. The arrangement of the present invention stops the fluid being washed into the public drains or onto the public highway.

The vessel may be adapted to receive the subsidiary discharge chutes. In addition to the main discharge chute, a number of additional chutes are provided to allow the mixer to discharge into different receptacles or receptacles placed in different locations.

In this stowed configuration, one or more additional chutes can be positioned around the end of the discharge chute. In one embodiment, the additional chutes can be used to provide a further shroud around the end of the discharge chute, ensuring that debris coming down the discharge chute is deflected into the vessel.

Alternatively or additionally, the vessel may be adapted to receive the subsidiary discharge chutes in the disengaged position.

In one embodiment, where the vessel is pivotally mounted to a lorry-based concrete mixer, in the disengaged position, the vessel may be rotated 90° in a horizontal plane from the engaged position. In this position, with the vessel opening facing backwards, it is relatively straightforward to hook one of the discharge chutes to the vessel for cleaning.

Whilst this concrete is in transit it is possible, due to it being so fluid, for the concrete to splash out the back, when, for example, the delivery truck requires stopping suddenly whilst travelling up hill. As the brakes are applied, the momentum of the concrete continues forward resulting in the concrete rebounding off the forward dished end, this results in a back wave which can spill onto the road. In an embodiment of the present invention, this is prevented by the apparatus.

According to a fourth aspect of the present invention, there is provided a method of washing down a concrete mixer discharge chute, the method comprising the steps of:
moving the discharge chute to a stowed position; and
washing the discharge chute, fluid from the discharge chute exiting a discharge chute portion into a vessel positioned beneath the discharge chute portion.

It will be understood that features listed as being non-essential with respect to any of the above aspects may be applicable to the any of the other aspects and are not repeated for brevity.

### Brief Description of the Drawings

Embodiments of the present invention will now be described with reference to the Figures, in which:
Figure 1 is a side view of an apparatus for a lorry-based concrete mixer according to a first embodiment not part of the present invention; and
Figure 2 is a close-up view of part of the apparatus of Figure 1.
Figure 3 is a first perspective view of an apparatus for a lorry-based concrete mixer according to a second embodiment of the present invention; and
Figure 4 is a second perspective view of the apparatus of Figure 3.

### Detailed Description of the Drawings

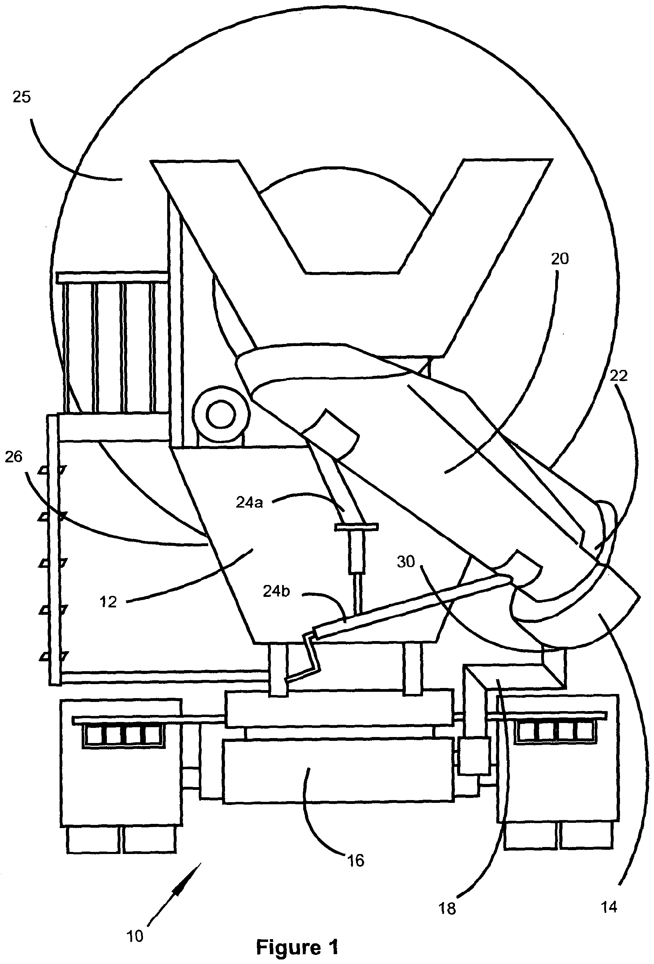

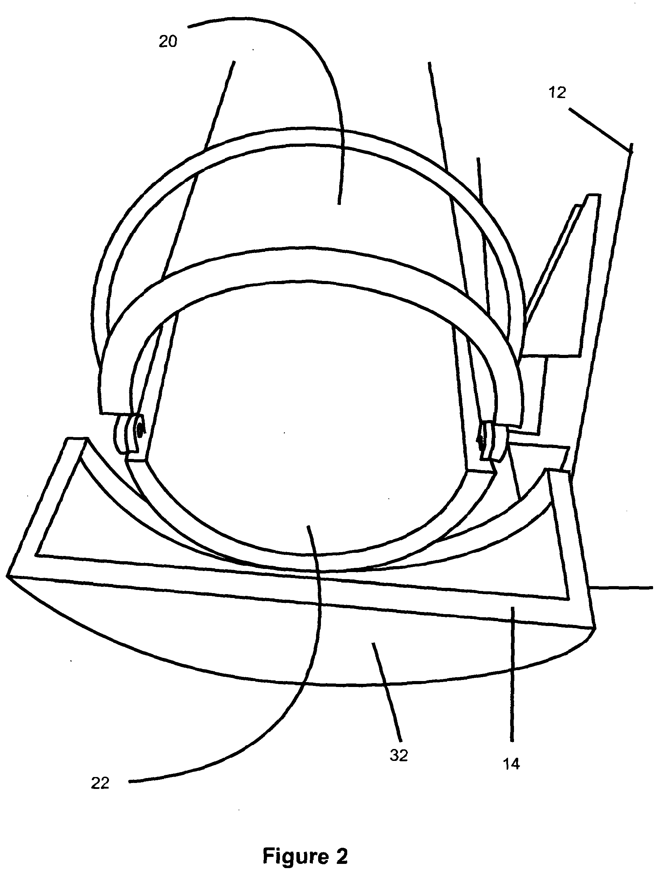

A first embodiment not part of the present invention will now be described with reference to Figures 1 and 2, showing a side view of an apparatus, generally indicated by reference numeral 10, for a lorry-based concrete mixer 12 and a close-up view of part of the apparatus 10 of Figure 1 respectively.

The apparatus 10 comprises a vessel 14 connected to a storage container 16 by a pipe 18. The storage container 16 and pipe 18 are mounted to a lorry-based concrete mixer 12. The concrete mixer 12 includes a drum 25, a mixer body 26 and a discharge chute 20 having an outlet 22. The discharge chute 20 is movable relative to the mixer body 26 and is shown in Figures 1 and 2 in a stowed position in which it is swung close to the mixer body 26. As can be seen, in this position, the chute outlet 22 is secured within the vessel 14. Particularly, in this position, the chute 20 cannot swing away from the stowed position should there be a failure in the brackets 24A, 24B, securing the chute to the mixer body 26. In this stowed position, and particularly after discharge of concrete, the chute 20 can be washed down, the washing water being captured within the vessel 14 and fed through a vessel outlet 30 into the storage container 16 via the pipe 18.

Referring particularly to Figure 2, the vessel 14 includes a back plate 32 which, in use, prevents debris which may exit the chute outlet 22, from leaving the vicinity of the mixer 12 by catching it and retaining it within the vessel 14.

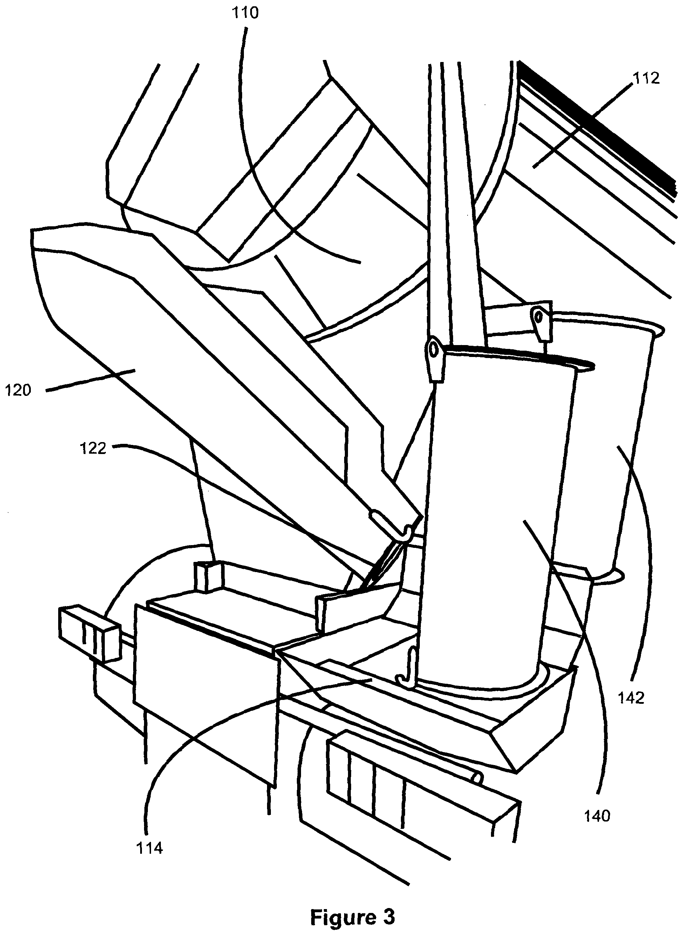

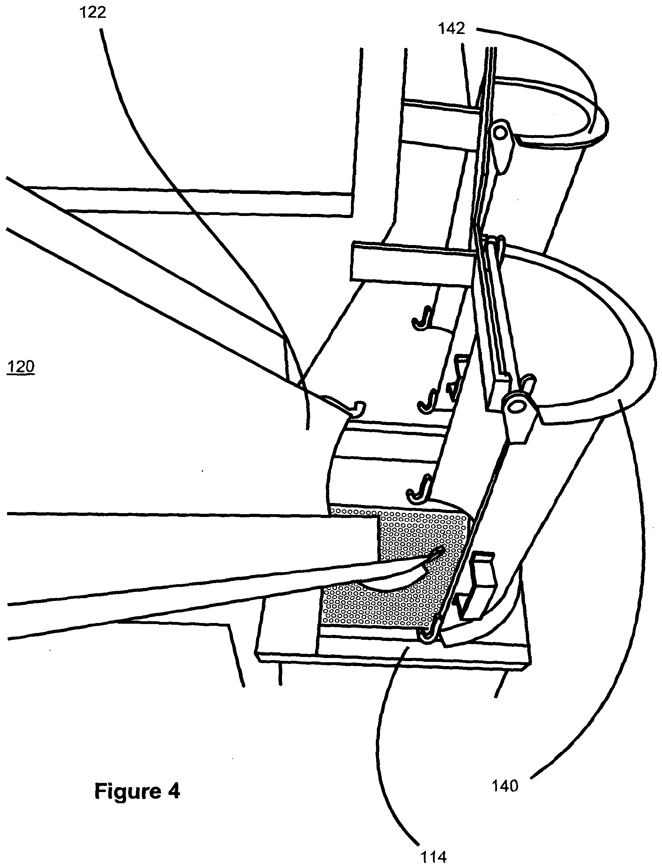

Referring to Figures 3 and 4, a first and a second perspective views of an apparatus 110 for a lorry-based concrete mixer, a slightly different arrangement is that shown for the apparatus 10 of Figures 1 and 2. In this apparatus 110, the discharge chute outlet 122 sits above the vessel 114 and debris exiting the lorry-based concrete mixer 112 will fall off the end 122 of the discharge chute and fall into the vessel 114. A secondary chute 140 which, in use, is attachable to the chute outlet 122 to provide extra utility when depositing concrete, is, in this stowed position, positioned around the chute outlet 122 to deflect debris, which may otherwise miss the vessel 114, into the vessel 114. In this position, the secondary chute 140 can also be cleaned with the washing water being captured within the vessel 114. A third chute 142 is also shown in the stowed position displaced from the vessel 114 however in further embodiments, this third chute 142 may also be positioned around the chute outlet 122 to deflect debris.

It will be seen that the apparatus provides utility by securing the chute in the stowed position, preventing debris exiting the chute and causing damage and by providing a means of storing waste water which has been used to wash down the chute.

It will be understood that modifications and improvements may be metres above described embodiments without departing from the scope of the invention as defined in the appended claims.

## Claims

1. A lorry-based concrete mixer (112) comprising:
a body (26);
a drum (25) mounted on the body, wherein the drum (25) is adapted to store concrete;
a discharge chute (120) having an inlet and an outlet (122), wherein the inlet is arranged to receive material exiting the drum (25);
wherein the discharge chute (120) is movable between a discharge position and an in-transit stowed position, wherein in the in-transit stowed position the discharge chute (20) is moved from the discharge position to be positioned proximate the body (26);
a vessel (114) being attached to the body (26) and being positioned on the body (26) to be beneath the outlet (122) of the discharge chute (20) when the discharge chute (120) is moved to the in-transit stowed position, wherein the vessel (114) is operable to receive wash-down water or slurry from the outlet (122) of the discharge chute whilst the discharge chute (120) is secured in the in-transit stowed position and whilst the vehicle is stationary and wherein the vessel (114) is also operable to receive and retain debris from the drum exiting the outlet of the discharge chute (120) when the discharge chute (120) is secured in the in-transit stowed position and whilst the vehicle is moving; and
**characterised by** a storage means adapted to secure at least one secondary chute (140) in the stowed position, wherein the storage means is adapted to secure the at least one secondary chute (140) adjacent the outlet (122) of the discharge chute (120) and wherein the storage means, in use, suspends the at least one secondary chute (140) above the vessel (114).

2. The lorry-based concrete mixer of the preceding claim, comprising a securing mechanism (24A, 24B) adapted to secure the discharge chute (20) to the body (26) of the lorry-based concrete mixer (12) in the stowed position, the securing mechanism (24A, 24B) being adapted to secure the outlet (22) of the discharge chute (20) over the vessel.

3. The lorry-based concrete mixer of claim 2, wherein the securing mechanism (24A, 24B) is a male member attached to one of the discharge chute or, in use, the body of the lorry-based concrete mixer and a female member attached to the other of the discharge chute or body of the lorry-based concrete mixer.

4. The lorry-based concrete mixer of claim 3, wherein the male and female members, once engaged, are arranged to prevent movement of the discharge chute in a horizontal plane.

5. The lorry-based concrete mixer of any of claims 1 to 4, wherein in the stowed position, the outlet (22) of the discharge chute (20) is, in use, positioned above the vessel (114).

6. The lorry-based concrete mixer of any preceding claim, wherein the storage means is adapted to position the at least one secondary chute (140) such that debris and/or fluid exiting the discharge chute (20) is directed towards the vessel (114).

7. The lorry-based concrete mixer of any preceding claim, wherein the storage means is adapted to secure the at least one secondary chute (120) in both the stowed position and the discharge position.

8. The lorry-based concrete mixer of any preceding claim, wherein the vessel (114) is adapted to be removably fixed relative to the body (26) of a lorry-based concrete mixer.

9. The lorry-based concrete mixer of claim 8, wherein the vessel (114) is adapted to be removably received within a cradle defined by a lorry-based concrete mixer chassis.

## Patentansprüche

1. Lastkraftwagen-basierter Betonmischer (112), umfassend:
einen Körper (26);
eine Trommel (25), die an dem Körper befestigt ist, wobei die Trommel (25) ausgebildet ist, um Beton zu speichern;
eine Ausgaberutsche (120) mit einem Einlass und einem Auslass (122), wobei der Einlass angeordnet ist, um die Trommel (25) verlassendes Material zu empfangen;
wobei die Ausgaberutsche (120) zwischen einer Ausgabeposition und einer
verstauten Transportposition bewegbar ist, wobei die Ausgaberutsche (20) in der verstauten Transportposition von der Ausgabeposition wegbewegt ist, um nahe zu dem Körper (26) angeordnet zu sein;
einen Behälter (114), der an dem Körper (26) befestigt ist und an dem Köper (26) angeordnet ist, um sich unterhalb des Auslasses (122) der Ausgaberutsche (20) zu befinden, wenn die Ausgaberutsche (120) in die verstaute Transportposition bewegt ist, wobei der Behälter (114) betreibbar ist, um Hinunterspülwasser oder Schlamm von dem Auslass (122) der Ausgaberutsche zu empfangen, während die Ausgaberutsche (120) in der verstauten Transportposition gesichert ist und während das Fahrzeug stillsteht, und wobei der Behälter (114) weiter betreibbar ist, um Schutt von der Trommel, der aus dem Auslass der Ausgaberutsche (120) austritt, zu empfangen und zu bewahren, wenn die Ausgaberutsche (120) in der verstauten Transportposition gesichert ist und während das Fahrzeug sich bewegt; und
**gekennzeichnet, durch** ein Speichermittel, das ausgebildet ist, um zumindest eine sekundäre Rutsche (140) in der verstauten Position zu sichern, wobei das Speichermittel ausgebildet ist, um die zumindest eine sekundäre Rutsche (140) benachbart zu dem Auslass (122) der Ausgaberutsche (120) zu sichern und wobei das Speichermittel, im Gebrauch, die zumindest eine sekundäre Rutsche (140) über dem Behälter (114) aufhängt.

2. Lastkraftwagen-basierter Betonmischer nach dem vorstehenden Anspruch, umfassend einen Sicherungsmechanismus (24A, 24B), der ausgebildet ist, um die Ausgaberutsche (20) an dem Körper (26) des Lastkraftwagen-basierten Betonmischers (12) in der verstauten Position zu befestigen, wobei der Sicherungsmechanismus (24A, 24B), ausgebildet ist, um den Auslass (22) der Ausgaberutsche (20) über dem Behälter zu sichern.

3. Lastkraftwagen-basierter Betonmischer nach Anspruch 2, wobei der Sicherungsmechanismus (24A, 24B) ein männliches Element, das an einem von der Ausgaberutsche oder, im Gebrauch, dem Körper des Lastkraftwagen-basierten Betonmischers befestigt ist, und ein weibliches Element, das an dem anderen von der Ausgaberutsche oder dem Körper des Lastkraftwagen-basierten Betonmischers befestigt ist, aufweist.

4. Lastkraftwagen-basierter Betonmischer nach Anspruch 3, wobei das männliche Element und das weibliche Element, wenn sie in Eingriff sind, angeordnet sind, um Bewegung der Ausgaberutsche in einer horizontalen Ebene zu verhindern.

5. Lastkraftwagen-basierter Betonmischer nach einem der Ansprüche 1 bis 4, wobei, in der verstauten Position, der Auslass (22) der Ausgaberutsche (20), im Gebrauch, über dem Behälter (114) angeordnet ist.

6. Lastkraftwagen-basierter Betonmischer nach einem der vorstehenden Ansprüche, wobei das Speichermittel ausgebildet ist, um die zumindest eine sekundäre Rutsche (140) derart zu positionieren, dass aus der Ausgaberutsche (20) austretender Schutt und/oder austretende Flüssigkeit in Richtung des Behälters (114) geleitet wird.

7. Lastkraftwagen-basierter Betonmischer nach einem der vorstehenden Ansprüche, wobei das Speichermittel ausgebildet ist, um die zumindest eine sekundäre Rutsche (120) sowohl in der verstauten Position als auch in der Ausgabeposition zu sichern.

8. Lastkraftwagen-basierter Betonmischer nach einem der vorstehenden Ansprüche, wobei der Behälter (114) ausgebildet ist, um in Bezug auf den Körper (26) eines Lastkraftwagen-basierten Betonmischers entfernbar befestigt zu werden.

9. Lastkraftwagen-basierter Betonmischer nach Anspruch 8, wobei der Behälter (114) ausgebildet ist, um innerhalb von einem durch ein Chassis des Lastkraftwagen-basierten Betonmischers definierten Gestell entfernbar aufgenommen zu werden.

## Revendications

1. Malaxeur à béton sur camion (112), comprenant :
un corps (26) ;
un tambour (25) monté sur le corps, dans lequel le tambour (25) est adapté pour stocker du béton ;
une goulotte d'évacuation (120) possédant une entrée et une sortie (122), dans lequel l'entrée est agencée pour recevoir un matériau quittant le tambour (25) ;
dans lequel la goulotte d'évacuation (120) est mobile entre une position d'évacuation et une position rangée de déplacement, dans lequel dans la position rangée de déplacement la goulotte d'évacuation (20) est déplacée de la position d'évacuation pour être positionnée à proximité du corps (26) ;
un réservoir (114) étant fixé au corps (26) et étant positionné sur le corps (26) de sorte à être en dessous de la sortie (122) de la goulotte d'évacuation (20) lorsque la goulotte d'évacuation (120) est déplacée jusqu'à la position rangée de déplacement, dans lequel le réservoir (114) peut fonctionner de sorte à recevoir de l'eau de rinçage ou de la boue à partir de la sortie (122) de la goulotte d'évacuation tandis que la goulotte d'évacuation (120) est fixée dans la position rangée de déplacement et tandis que le véhicule est à l'arrêt et dans lequel le réservoir (144) peut également fonctionner de sorte à recevoir et retenir des débris provenant du tambour quittant la sortie de la goulotte d'évacuation (120) lorsque la goulotte d'évacuation (120) est fixée dans la position rangée de déplacement et tandis que le véhicule se déplace ;
et
**caractérisé par** des moyens de stockage adaptés pour fixer au moins une goulotte secondaire (140) dans la position rangée, dans lequel les moyens de stockage sont adaptés pour fixer l'au moins une goulotte secondaire (140) de manière adjacente à la sortie (122) de la goulotte d'évacuation (120) et dans lequel les moyens de stockage, pendant l'utilisation, suspendent l'au moins une goulotte secondaire (140) au-dessus du réservoir (114).

2. Malaxeur à béton sur camion selon la revendication précédente, comprenant un mécanisme de fixation (24A, 24B) adapté pour fixer la goulotte d'évacuation (20) au corps (26) du malaxeur à béton sur camion (12) dans la position rangée, le mécanisme de fixation (24A, 24B) étant adapté pour fixer la sortie (22) de la goulotte d'évacuation (20) au-dessus du réservoir.

3. Malaxeur à béton sur camion selon la revendication 2, dans lequel le mécanisme de fixation (24A, 24B) est un élément mâle fixé à l'un parmi la goulotte d'évacuation ou, pendant l'utilisation, le corps du malaxeur à béton sur camion et un élément femelle fixé à l'autre parmi la goulotte d'évacuation ou le corps du malaxeur à béton sur camion.

4. Malaxeur à béton sur camion selon la revendication 3, dans lequel les éléments mâle et femelle, lorsqu'ils sont en prise, sont agencés pour éviter le déplacement de la goulotte d'évacuation dans un plan horizontal.

5. Malaxeur à béton sur camion selon l'une quelconque des revendications 1 à 4, dans lequel dans la position rangée, la sortie (22) de la goulotte d'évacuation (20) est, pendant l'utilisation, positionnée au-dessus du réservoir (114).

6. Malaxeur à béton sur camion selon une quelconque revendication précédente, dans lequel les moyens de stockage sont adaptés pour positionner l'au moins une goulotte secondaire (140) de sorte que les débris et/ou le fluide quittant la goulotte d'évacuation (20) soient dirigés vers le réservoir (114).

7. Malaxeur à béton sur camion selon une quelconque revendication précédente, dans lequel les moyens de stockage sont adaptés pour fixer l'au moins une goulotte secondaire (120) à la fois dans la position rangée et dans la position d'évacuation.

8. Malaxeur à béton sur camion selon une quelconque revendication précédente, dans lequel le réservoir (114) est adapté pour être fixé de manière amovible par rapport au corps (26) d'un malaxeur à béton sur camion.

9. Malaxeur à béton sur camion selon la revendication 8, dans lequel le réservoir (114) est adapté pour être reçu de manière amovible dans une nacelle définie par un châssis de malaxeur à béton sur camion.
